# EUROPEAN PATENT SPECIFICATION

(11) **EP 3 364 492 B1**
(45) Date of publication and mention of the grant of the patent: **29.01.2020**
(21) Application number: 17156803.3
(22) Date of filing: 20.02.2017
(51) Int. Cl.: H01M 10/42, H01M 10/52, H01M 10/613, H01M 10/625, H01M 10/6554

(54) **BATTERY MODULE INCLUDING AN ELECTROOSMOTIC PUMP**
BATTERIEMODUL MIT EINER ELEKTROOSMOTISCHEN PUMPE
MODULE DE BATTERIE COMPRENANT UNE POMPE ÉLECTRO-OSMOTIQUE

(43) Date of publication of application: 22.08.2018
(73) Proprietor: Samsung SDI Co., Ltd, Gyeonggi-do 17084 (KR)
(72) Inventor: GOLUBKOV, Andrej, 8010 Graz (AT)
(74) Representative: Gulde & Partner

(56) References cited:
- CN-U- 205 488 403
- US-A1- 2010 304 259
- US-A1- 2011 097 215
- US-A1- 2016 164 150
- US-A1- 2016 233 482

## Description

### Field of the Invention

The present invention relates to a battery module including at least one compartment for accommodation components of the battery module.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is housed. In modular designs, pluralities of battery cells are connected to form submodules and several submodules are connected to form the module. The battery management functions can then be at least partially realized on either module or submodule level and thus interchangeability might be improved. One or more battery modules are mechanically and electrically integrated, equipped with a thermal management system and set up for communication with one or more electrical consumers in order to form a battery system. The battery module usually includes closed compartments (or housings) for accommodation of at least parts of the battery module and protection against environmental influences. In particular, corrosion of the battery components in the presence of water should be prevented, especially any damage of the electric and electronic components of the battery module.

However, the electric and electronic compartments of the battery module, especially in automotive environment, are subject to temperature cycles with high temperature spread. During the temperature cycles a gas exchange with ambient air must take place in order to avoid high pressure fluctuations inside the compartment. During air exchange humid air may enter the compartment. When the compartment cools down, the humidity inside the compartment may condensate. Condensed water facilitates corrosion of the electronic components in the compartment.

The situation is even worse for large compartments for secondary battery modules. The large surface areas of such compartments cannot withstand the gas pressure change during temperature cycling. Therefore, pressure compensation openings to the ambient air must be provided within the compartments. High volumes of potentially humid air are exchanged through the opening when the battery heats up and cools down during usage. Condensed water inside battery compartments not only accelerates corrosion, but can also lead to safety relevant decrease of insulation resistance and, in the worst case, to shortcuts inside the high voltage battery.

Cost efficient control of humidity inside of battery compartments is a challenge. According to one embodiment of the state of art, filters inside the pressure compensation openings should prevent the water from entering into the compartments. This may be true for water in liquid form, but it is not possible to prevent vaporized water in gas form from entering into the compartment through such a filter. Additionally, typical plastics materials that are used in the automotive industry (such as polyamides PA6 and PA66) allow some water diffusion. Therefore, considering long time periods, water may enter into the compartment through the compartment walls, when the difference of outside and inside partial pressure of water vapor is high. The diffusion effect is relevant, because the housing should stay water free for the whole life of the vehicle (> 10 years), and even small diffusion limited accumulation of water will have adverse effects in the long run.

It is thus an object of the present invention to overcome or reduce at least some of the drawbacks of the prior art and to provide a battery system that ensures long-term dryness of battery module compartments.

CN 205488403 U relates to a battery pack, wherein a battery box is equipped with a fluid adsorption area at a bottom of the box. Beneath the fluid adsorption area a valve for letting out water is positioned.

US 2016/0233482 A1 relates to a device and a method for removing moisture from a battery housing. The device includes an electroosmotic pump.

### Summary of Invention

One or more of the drawbacks of the prior art could be avoided or at least reduced by means of the present invention. In particular, a battery module is provided comprising at least one compartment for accommodation components of the battery module, wherein the compartment includes an electroosmotic pump adapted for pumping liquid water out of the compartment, wherein the electroosmotic pump is integrated into a bottom plate of the compartment.

In other words, the battery module includes one or more housings for accommodation of battery system components. These housings are designed for providing protection against external mechanical strain. Furthermore, these housings should protect the enclosed battery components against harmful environmental media, especially liquid water, which may cause corrosion processes. The present invention is based on the finding that due to the specific conditions during the operation of secondary battery modules, especially in automotive applications, an introduction of water vapor into housings or compartments for accommodating functional components of the battery module and protecting the same against harmful environment influences is unavoidable at least in long-term periods. As a consequence, there will be condensed water within these housings or compartments of the battery module, which may corrode the functional components, for example the terminals of the battery cells and electronic equipment for regulation or control of the operation of the battery module. Furthermore, the mechanical integrity of the compartment itself may be deteriorated due to corrosive processes in presence of liquid water. The inventor found that providing an electroosmotic pump, which is arranged and adapted to pump liquid water out of the compartment, significantly improves the dryness within the compartment. The electroosmotic pump can be easily integrated into the compartment, for example a wall of the same. Furthermore, an electroosmotic pump has a very small design size and weight and installation space is saved. The amount of condensed water within a short period, for example a day, is quite small. An electroosmotic pump is particularly favorable for such small discharge flow and ensures low electric current consumption during operation. Preferably, the compartment encloses a plurality of battery cells.

According to the present invention, the electroosmotic pump is integrated into a bottom plate of the compartment. Thus, parts of the pump replace an area of the bottom place. In particular, the electroosmotic pump may include a porous hydrophilic area integrated into the bottom plate of the compartment, i.e. there is no additional frame or support element for fixing the porous hydrophilic area beside the bottom plate itself. Therefore, installation space and weight could be reduced.

The electroosmotic pump is integrated into a bottom plate of the compartment, the bottom plate includes a surface structure on its inner surface and the electroosmotic pump is provided at a lowest point of surface structure. In other words, the bottom plate shows a kind of pattern, trenches or the like which allows condensed water to rinse to a collection point. The electroosmotic pump is arranged at said collection point. As a consequence, the time for removing condensed water out of the compartment is reduced.

According to another embodiment of the present invention, a cooling element is provided adjacent to the electroosmotic pump. The cooling element will support condensation of water vapor at the electroosmotic pump. In case that the electroosmotic pump is integrated into the bottom plate and the bottom plate includes a surface structure it is preferred that the bottom plate is cooled, i.e. the bottom plate acts as a cooling element.

According to another embodiment of the present invention, the battery module itself constitutes a voltage source of the electroosmotic pump. That means, there is no additional external voltage source for operation of the pump. Hence, the manufacturing process and the total costs for the battery system could be reduced.

According to another aspect of the present invention, a vehicle including a battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a perspective view of a battery module.
Fig. 2 illustrates a sectional view of a compartment of the battery module according to the present invention.

### Detailed Description of the Invention

Features of the inventive concept and methods of accomplishing the same may be understood more readily by reference to the following detailed description of embodiments and the accompanying drawings. Hereinafter, an example embodiment will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, elements, and/or components, but do not preclude the presence or addition of one or more other features, elements, components, and/or groups thereof. Expressions such as "at least one of," when preceding a list of elements, modify the entire list of elements and do not modify the individual elements of the list.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

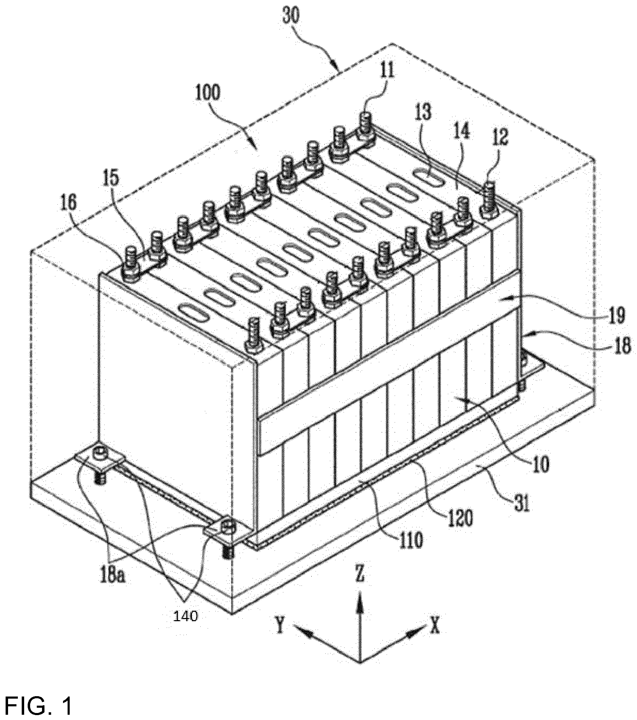

Referring to Fig. 1, an exemplary embodiment of a battery module 100 includes a plurality of battery cells 10 aligned in one direction and a heat exchange member 110 provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a bottom plate 31 by bolts 140. The bottom plate 31 is part of a compartment 30.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle.

Generally, the battery cells 10 generate a large amount of heat while being charged/discharged. The generated heat is accumulated in the battery cells 10, thereby accelerating the deterioration of the battery cells 10. Therefore, the battery module 100 further includes a heat exchange member 110, which is provided adjacent to the bottom surface of the battery cells 10 so as to cool down the battery cells 10. In addition, an elastic member 120 made of rubber or other elastic materials may be interposed between the bottom plate 31 and the heat exchange member 110.

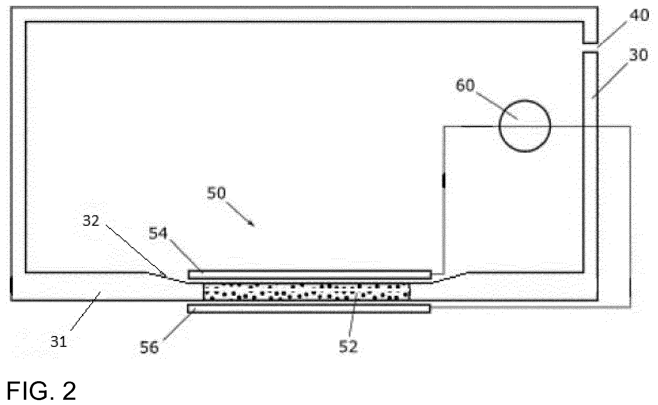

Fig. 2 illustrates schematically the basic structure of the compartment 30. The compartment 30 of the battery module 100 encloses the plurality of battery cells 10 (not shown) hermetically despite a pressure compensation opening 40 to the ambient air. The pressure compensation opening 40 may include a filter or other arrangement for avoiding entrance of liquid water. The compartment 30 may be formed of a metal, for example aluminum.

At a lower side of the compartment 30, more precisely integrated within the bottom plate 31, there is provided an electroosmotic pump 50 (EOP). EOPs are developed based on electroosmosis, which is the movement of uncharged liquid relative to a stationary charged surface due to an externally applied electric field. Electroosmosis is a phenomenon inherent to a solid-liquid interface. The application of an electric field across a porous dielectric material causes liquid to flow. EOPs possess several outstanding features: EOPs are capable of generating constant and pulse-free flows and the flow magnitude and direction of an EOP are convenient to control. Electroosmosis requires charged solid surfaces to generate electroosmotic flow (EOF). Most surfaces spontaneously acquire a finite charge density when in contact with an aqueous solution. For example, a silica surface contacted with an aqueous solution becomes charged due to the deprotonation of the silanol groups on the surface. The charged surface attracts counterions and repels coions, resulting in the formation of an Electrical Double Layer EDL. When an electric field is applied in parallel with the surface, cations in the EDL region are forced to move in the direction of the electric field. These mobile ions will drag the liquid, causing a net motion of the bulk fluid. The flow of the bulk fluid is the above mentioned EOF. Fluid propulsion devices based on EOF are generally called EOPs. EOPs are normally operated under a DC electric field. The materials utilized to create EOF are primarily open-channels or porous substances.

In particular, according to the exemplary embodiment illustrated in Fig. 2 the EOP 50 includes a porous hydrophilic area 52 embedded into a part of the compartment 30, more precisely integrated into the bottom plate 31 of the compartment 30. The porous material may be for example composed of silica based sintered glass. The bottom plate 31 bears a surface structure 32 on its inner surface for collecting water and feeding the same towards the EOP 50. For example, the surface structure 32 may be a trench or the like which allows water to rinse to the EOP 50. Here, the 'water' may be condensed water inside of the compartment 30, or may be water that has entered into the compartment 30 from outside thereof. According to such embodiment the EOP 50 will be provided at the lowest point of the surface structure 32.

Above and below the porous hydrophilic area 52 electrodes 54 and 56 are placed. The electrodes 54, 56 are connected to a voltage source 60, thus generating an electric filed through the porous hydrophilic area 52. The electrodes 54, 56 are perforated, so that vapor can condense (and evaporate) on the surface of the porous hydrophilic area 52. The electrodes 54, 56 may have a corrosion resistant coating.

When the temperature inside the compartment 30 falls below the dew point, vapor condensates to liquid water. Liquid water on the inner surface of the porous hydrophilic area 52 is transported to the outside by the electroosmotic effect. The water can subsequently evaporate on the outside of the compartment 30. Thus, it is beneficial to keep the outside surface of the porous hydrophilic area 52 accessible to the environment air.

The process is repeated as far as there is condensed liquid water at the inner surface of the porous hydrophilic area 52. Therefore, at every cool-down (or condensation) cycle a fraction of the water/vapor inside the compartment 30 is removed and the inside air becomes less humid.

It is beneficial to use the same battery cells 10, which are provided within the compartment 30, as the voltage source for the electrodes 54 and 56 in order to simplify the manufacturing process of the battery module 100.

According to another embodiment, there is provided a cooling element (not shown) next to the inner surface of the porous hydrophilic area 52. Thus, a temperature of said inner surface may be lowered compared to the temperature of the other components inside the compartment 30. As a consequence, condensation on the surface is promoted.

## Claims

1. A battery module (100) comprising at least one compartment (30) for accommodation components of the battery module (100),
wherein the compartment (30) includes an electroosmotic pump (50) adapted for pumping liquid water out of the compartment and wherein the electroosmotic pump (50) is integrated into a bottom plate (31) of the compartment (30),
**characterized in that** the bottom plate (31) includes a surface structure (32) on its inner surface and the electroosmotic pump (50) is provided at a lowest point of the surface structure (32).

2. The battery module of claim 1, wherein the electroosmotic pump (50) includes a porous hydrophilic area (52) integrated into the bottom plate (31) of the compartment (30).

3. The battery module of claim 2, wherein the porous hydrophilic area (52) includes silica based material.

4. The battery module of claim 3, wherein the electroosmotic pump (50) includes a pair of electrodes (54, 56) placed above and below the porous hydrophilic area (52) respectively.

5. The battery module of claim 4, wherein each of the pair of electrodes (54, 56) is perforated and has a corrosion resistant coating.

6. The battery module of claim 1, wherein a cooling element is provided adjacent to the electroosmotic pump (50).

7. The battery module of claim 6, wherein the bottom plate (31) acts as the cooling element.

8. The battery module of claim 1, wherein the battery module (100) includes a voltage source of the electroosmotic pump (50).

9. The battery module of claim 1, wherein the compartment (30) encloses a plurality of battery cells (10).

10. A vehicle including a battery module (100) according to one of the preceding claims.

## Patentansprüche

1. Batteriemodul (100), umfassend mindestens eine Kammer (30) zur Aufnahme von Komponenten des Batteriemoduls (100),
wobei die Kammer (30) eine elektroosmotische Pumpe (50) beinhaltet, die zum Pumpen von flüssigem Wasser aus der Kammer heraus ausgelegt ist, und wobei die elektroosmotische Pumpe (50) in einer Bodenplatte (31) der Kammer (30) integriert ist,
**dadurch gekennzeichnet, dass** die Bodenplatte (31) eine Oberflächenstruktur (32) auf ihrer Innenoberfläche aufweist und die elektroosmotische Pumpe (50) an einem tiefsten Punkt der Oberflächenstruktur (32) bereitgestellt ist.

2. Batteriemodul nach Anspruch 1, wobei die elektroosmotische Pumpe (50) einen porösen hydrophilen Bereich (52) beinhaltet, der in der Bodenplatte (31) der Kammer (30) integriert ist.

3. Batteriemodul nach Anspruch 2, wobei der poröse hydrophile Bereich (52) ein Material auf Siliciumdioxid-Basis beinhaltet.

4. Batteriemodul nach Anspruch 3, wobei die elektroosmotische Pumpe (50) ein Paar Elektroden (54, 56) beinhaltet, die jeweils oberhalb und unterhalb des porösen hydrophilen Bereichs (52) angeordnet sind.

5. Batteriemodul nach Anspruch 4, wobei jede von dem Paar Elektroden (54, 56) perforiert ist und eine korrosionsbeständige Beschichtung aufweist.

6. Batteriemodul nach Anspruch 1, wobei ein Kühlelement benachbart zu der elektroosmotischen Pumpe (50) bereitgestellt ist.

7. Batteriemodul nach Anspruch 6, wobei die Bodenplatte (31) als das Kühlelement fungiert.

8. Batteriemodul nach Anspruch 1, wobei das Batteriemodul (100) eine Spannungsquelle der elektroosmotischen Pumpe (50) beinhaltet.

9. Batteriemodul nach Anspruch 1, wobei die Kammer (30) mehrere Batteriezellen (10) umschließt.

10. Fahrzeug, das ein Batteriemodul (100) nach einem der vorhergehenden Ansprüche aufweist.

## Revendications

1. Module de batterie (100) comprenant au moins un compartiment (30) destiné à accueillir des composants du module de batterie (100),
dans lequel le compartiment (30) contient une pompe électro-osmotique (50) conçue pour pomper de l'eau liquide hors du compartiment et dans lequel la pompe électro-osmotique (50) est intégrée à une plaque de fond (31) du compartiment (30),
**caractérisé en ce que** la plaque de fond (31) comporte une structure de surface (32) sur sa surface intérieure et la pompe électro-osmotique (50) se trouve au point le plus bas de la structure de surface (32).

2. Module de batterie selon la revendication 1, dans lequel la pompe électro-osmotique (50) inclut une zone hydrophile poreuse (52) intégrée à la plaque de fond (31) du compartiment (30).

3. Module de batterie selon la revendication 2, dans lequel la zone hydrophile poreuse (52) contient un matériau à base de silice.

4. Module de batterie selon la revendication 3, dans lequel la pompe électro-osmotique (50) comporte une paire d'électrodes (54, 56) placées respectivement au-dessus et en dessous de la zone hydrophile poreuse (52).

5. Module de batterie selon la revendication 4, dans lequel chaque électrode de la paire d'électrodes (54, 56) est perforée et comporte un revêtement résistant à la corrosion.

6. Module de batterie selon la revendication 1, dans lequel un élément de refroidissement est placé à proximité de la pompe électro-osmotique (50).

7. Module de batterie selon la revendication 6, dans lequel la plaque de fond (31) fait fonction d'élément de refroidissement.

8. Module de batterie selon la revendication 1, dans lequel le module de batterie (100) comporte une source de tension de la pompe électro-osmotique (50).

9. Module de batterie selon la revendication 1, dans lequel le compartiment (30) renferme une pluralité d'éléments de batterie (10).

10. Véhicule comportant un module de batterie (100) selon l'une des revendications précédentes
